# EUROPÄISCHE PATENTSCHRIFT

(11) **EP 3 384 183 B1**
(45) Veröffentlichungstag und Bekanntmachung des Hinweises auf die Patenterteilung: **13.11.2019**
(21) Anmeldenummer: 16798531.6
(22) Anmeldetag: 22.11.2016
(51) Int. Cl.: F16H 57/08, F03D 15/00, F16C 19/38

(54) **PLANETENTRÄGER FÜR EINE GETRIEBESTUFE EINES PLANETENGETRIEBES UND VERFAHREN ZUR VORSPANNUNG**
PLANETARY CARRIER FOR A TRANSMISSION STAGE OF A PLANETARY TRANSMISSION, AND PRE-TENSIONING METHOD
PORTE-SATELLITES POUR ÉTAGE D'ENGRENAGE D'UN ENGRENAGE PLANÉTAIRE ET PROCÉDÉ DE PRÉCONTRAINTE

(30) Priorität: 30.11.2015 DE 102015223667
(43) Veröffentlichungstag der Anmeldung: 10.10.2018
(73) Patentinhaber: ZF Friedrichshafen AG, 88046 Friedrichshafen (DE)
(72) Erfinder: MÜNCH, Jörg, 42399 Wuppertal (DE); STRASSER, Dirk, 58339 Breckerfeld (DE); SPERLICH, Ralf, 58452 Witten (DE)
(86) Internationale Anmeldenummer: PCT/EP2016/078425
(87) Internationale Veröffentlichungsnummer: WO 2017/093075

(56) Entgegenhaltungen:
- EP-A1- 0 715 087
- EP-A1- 2 072 858
- WO-A2-2013/043822
- DE-A1-102007 042 770
- DE-A1-102010 040 748
- US-A1- 2006 293 142

## Beschreibung

Die vorliegende Erfindung betrifft einen Planetenträger für eine Getriebestufe eines Planetengetriebes, insbesondere ein mehrstufiges Planetengetriebe für Wind- und Industrieanlagen mit vorgespannten Wälzlagern.

### Stand der Technik

Ein derartiges Planetengetriebe eignet sich zur Übertragung von Leistungen im Multimegawattbereich, wobei eine langsame Drehbewegung einer Antriebswelle in eine schnelle Drehbewegung einer Abtriebswelle umgewandelt wird. Das Planetengetriebe kann auf wenigstens einem Planetenbolzen eine Lageranordnung zur drehbaren Lagerung eines Planetenrades aufweisen. Die Lageranordnung kann mindestens zwei zwischen dem Planetenrad und dem Planetenbolzen angeordnete Wälzlager, z.B. Zylinderrollenlager oder Kegelrollenlager, umfassen, wobei die mindestens zwei Wälzlager jeweils einen Innenring und optional einen Außenring aufweisen. Der Innenring kann drehfest mit dem Planetenbolzen und er Außenring drehfest mit dem Planetenrad verbunden sein, wodurch eine drehende Lagerung der Planetenräder innerhalb des Planetengetriebes ermöglicht wird.

Es ist bekannt, Lageranordnungen mit einem Paar von Kegelrollenlagern mit einer Deckelkonstruktion und Sechskantschrauben vorzuspannen. Weiterhin ist bekannt, eine Lageranordnung mit Zylinderrollenlagern mit einer Sechskantschraube vorzuspannen, um insbesondere einen schlupffreien Betrieb des Planetengetriebes zu gewährleisten. Allerdings kann ein dabei typischerweise zum Einsatz kommendes drehendes. Anzugsverfahren zu einer unpräzisen Vorspannkraft führen, verbunden mit einer relativ großen Streuung von Reibmomenten unter einer Schraubenkopfauflage. Weiterhin liegt bei einer solchen Vorspannung üblicherweise eine relativ geringe Klemmlänge der Schrauben vor, wodurch das Risiko besteht, dass die Vorspannung sich löst und wenig robust gegen Torsionsverformungen des Planetenträgers ist.

Aus der gattungsgemäßen Druckschrift US 2006/293142 A1 und der Druckschrift DE 10 2010 040748 A1 sind Planetenträger mit verschraubten Planetenbolzen bekannt.

Die Lageranordnung mit ihren Wälzlagern stellen sehr sensible Maschinenelemente dar, wobei die Lagervorspannung sehr präzise eingestellt und dauerhaft aufrecht erhalten sollte, um die Zuverlässigkeit des Planetengetriebes über dessen geforderte Lebensdauer zu gewährleisten.

### Offenbarung der Erfindung

Es ist daher eine Aufgabe der Erfindung, einen Planetenträger der eingangs genannten Art bereitzustellen, welcher eine Lageranordnung mit präzise eingestellter und dauerhafter Vorspann kraft aufweist.

Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren.

Der Planetenträger für eine Getriebestufe eines Planetengetriebes umfasst wenigstens einen drehfest in dem Planetenträger gelagerten Planetenbolzen und ein Paar von. auf dem Planetenbolzen gelagerten Kegelrollenlagern, auf denen ein Planetenrad gelagert ist. Der Planetenbolzen ist mittels einer Stiftschrauben Verbindung, welche eine Stiftschraube und eine Mutter umfasst, an dem Planetenträger befestigt und die Kegelrollenlager sind mittels der Stiftschrauben Verbindung zwischen dem: Planetenträger und dem Planetenbolzen derart gegeneinander verspannt, dass sie axial vorgespannt sind. Anstatt einer Stiftschraubenverbindung, können auch zwei oder mehrere Stiftschraubenverbindungen in der vorstehend und nachstehend beschriebenen Weise vorgesehen sein. Mit anderen Worten wird eine Vorspannung einer Kegelrollenlageranordnung an einem Planetenbolzen vorgeschlagen, wobei die Vorspannung gleichzeitig eine Befestigung des Planetenbolzens in einer Aufnahmebohrung des Planetenträgers bewirken kann. Die Kegelrollenlager sind dabei bevorzugt in O- Anordnung zueinander positioniert und bilden zusammen eine Lageranordnung, wobei die Kegelrollenlager insbesondere an einer Außenumfangsfläche des Planetenbolzens axial zueinander beabstandet angeordnet sein können, wozu ein zwischen den Kegelrollenlagern positionierter Zwischenring vorgesehen sein kann.

Die Stiftschraube kann ein Einschraubende und ein Mutterende aufweisen. Das Einschraubende kann ein Außengewinde aufweisen, mittels welchem das Einschraubende in eine Gewindebohrung, z.B. in Form einer Sacklochbohrung mit Innengewinde, des Planetenträgers geschraubt ist. Das Mutterende kann ebenfalls ein Außengewinde aufweisen, mittels welchem die Mutter mit ihrem Innengewinde auf das Mutterende der Stiftschraube geschraubt und, z.B. mittels einer Unterlegscheibe gegenüber dem Planetenbolzen angezogen werden kann. Auf diese Weise kann der Planetenbolzen an dem Planetenträger befestigt werden. Auf der Seite des Schraubenendes kann der Planetenträger ein axiales Gegenlager für eines der Kegelrollenlager ausbilden und der Planetenbolzen kann auf der Seite der Mutter einen radialen Absatz aufweisen, welcher an einem der Stirnseiten der Kegelrollenlager anliegt und bei Anzug der Mutter eine Druckkraft auf die Stirnseite ausübt, so dass die Kegelrollenlager zwischen dem axialen Gegenlager des Planetenträgers und dem radialen Absatz des Planetenbolzens axial verspannt und dadurch axial vorgespannt werden.

Der erfindungsgemäße Planetenträger mit seiner Stiftschraubenverbindung ermöglicht ein Aufbringen einer präzisen und dauerhaften Vorspannkraft auf die Kegelrollenlager, die weder zu klein ist, was zu Lagerschlupf und einer ungünstigen Lastaufteilung aufgrund von möglichen Verformungen des Planetenträgers führen kann, noch zu groß ist, was zu einer zu starken Vorspannung und damit einhergehenden Überlast der Lageranordnung führen kann, was sich negativ auf die Lebensdauer der Lageranordnung auswirken kann. Die Stiftschraubenverbindung kann eine zusätzlich in sie aufgrund einer Verformung des Planetenträgers eingebrachte Dehnung kompensieren, denn durch die Stiftschraubenverbindung kann ein besonders großes Klemmlängenverhältnis aufweisen. Die Stiftschraubenverbindung zeichnet sich daher durch eine besonders hohe Robustheit aus.

Gemäß einer Ausführungsform ist vorgesehen, dass eine Durchgangsbohrung den Planetenbolzen in dessen Längsrichtung durchsetzt, wobei die Stiftschraube innerhalb der Durchgangsbohrung mit Abstand zu dem Planetenbolzen verläuft. Damit können Verschleiß und statisch unbestimmte Zustände bei einer Berührung zwischen der Stiftschraube und der Durchgangsbohrung vermieden werden.

Erfindungsgemäß ist vorgesehen, dass die Mutter ein Zentrierelement aufweist, welches in einer Senkung des Planetenbolzens ausgerichtet ist. Durch die Ausrichtung des Zentrierelements kann auch die Stiftschraube gegenüber dem Planetenbolzen bzw. dessen Durchgangsbohrung ausgerichtet, insbesondere zentriert, werden, so dass eine Berührung zwischen der Stiftschraube und der Durchgangsbohrung im Falle einer lastbedingten Verformung des Planetenträgers, einer montagebedingt leicht verdrehten idealen Positionierung von Durchgangsbohrung und Stiftschraube zueinander oder fertigungsbedingt durch Positions- und Lageabweichungen, was zu Undefinierten Beanspruchungen und somit zum Verschleiß und Versagen der Stiftschraubenverbindung führen könnte, besonders sicher vermieden wird.

In diesem Zusammenhang werden besonders gute Ergebnisse erzielt, wenn dass das Zentrierelement durch einen Zentrierbund, einen Zentrierabsatz, eine Zentrierbuchse oder einen Zentrieransatz gebildet wird.

Weiterhin kann vorteilhaft vorgesehen sein, dass die Mutter eine integrierte Unterlegscheibe aufweist. Mit "integriert" ist in diesem Zusammenhang gemeint, dass die Mutter und die Unterlegscheibe einteilig miteinander verbunden sind. Dies leistet einen Beitrag zur Minimierung von Mikrobewegungen und Verschleiß. Weiterhin kann die Unterlegscheibe besonders bevorzugt in einer passenden Senkung des Planetenbolzens mit kleinem Spiel anliegen, wodurch die Stiftschraube ausgerichtet bzw. zentriert werden kann. Gemäß einer weiteren Ausführungsform ist vorgesehen, dass ein Lagesicherungselement bezüglich der Längsachse des Planetenbolzens exzentrisch in dem Planetenbolzen und dem Planetenträger angeordnet ist. Das Lagesicherungselement kann auf der Seite des Planetenbolzens insbesondere in einer Stirnseite des Planetenbolzens mit Abstand zu dessen Mittelpunkt angeordnet, z.B. eingesteckt, sein, wobei eine Längsachse des Zentrierelements parallel zu der Längsachse des Planetenbolzens verläuft. Auf der Seite des Planetenträgers kann das Lagesicherungselement in eine der Stirnseite zugewandten Anlagefläche des Planetenträgers angeordnet, insbesondere eingesteckt, sein. Alternativ kann auch vorgesehen werden, dass am Umfang des Planetenbolzens Ansätze angeordnet werden, z.B. Exzenter oder Polygone, welche in korrespondierende Ausnehmungen in dem Planetenträger eingreifen können. Das Lagesicherungselement ermöglicht auf diese Weise eine rotatorische Lagebestimmung des Planetenbolzens innerhalb des Planetenträgers, beispielsweise innerhalb wenigstens einer Planetenbolzen-Bohrung des Planetenträgers, und verhindert, dass sich der Planetenbolzen um seine eigene Längsachse innerhalb des Planetenträgers drehen kann.

Mit anderen Worten kann eine berührungsfreie Führung der Stiftschraube im Planetenbolzen durch das Lagesicherungselement, z.B. in Form eines Sicherungsstiftes, in passenden Aufnahmebohrungen des Planetenbolzens und des Planetenträgers sowie einer Mutter mit einem Sicherungselement, z.B. in Form sowie eines Zentrierbundes, an der Stiftschraube auf einer freien Seite des Planetenbolzens bereitgestellt werden.

In diesem Zusammenhang werden besonders gute Ergebnisse erzielt, wenn das weitere Zentrierelement durch einen Zylinderstift, einen Kegelstift oder eine Spannhülse gebildet ist.

Das erfindungsgemäße Planetengetriebe umfasst eine vorstehend beschriebenen erfindungsgemäßen Planetenträger. Die erfindungsgemäße Windkraftanlage umfasst ein vorstehend genanntes erfindungsgemäßes Planetengetriebe. Das erfindungsgemäße Verfahren zur Vorspannung eines Paars von Kegelrollenlagern in einem vorstehend beschriebenen erfindungsgemäßen Planetenträger zeichnet sich dadurch aus, dass die Mutter durch ein hydraulisches Anziehverfahren angezogen wird. Dadurch wird eine besonders kleine Streuung der Montagevorspannkraft und dadurch deren besonders präzise Einstellung ermöglicht.

### Kurze Beschreibung der Figuren

Im Folgenden werden Ausführungsbeispiele der Erfindung anhand der Zeichnung näher erläutert. Hierbei zeigt:
Fig. 1 eine schematische Seitenansicht eines oberen Teils einer Windkraftanlage mit einem: Planetengetriebe,
Fig. 2 eine Längsschnitt- Darstellung durch einen Teil eines Ausführungsbeispiels eines erfindungsgemäßen Planetenträgers in einem Planetengetriebe zum Einsatz in der Windkraftanlage nach Fig. 1,
Fig. 3 eine vergrößertes Detail eines Planetenbolzens des Planetenträgers nach Fig. 2 und

Fig. 4 eine Längsschnitt- Darstellung des Planetenträgers nach Fig. 2 unter einem anderen Schnittwinkel.

### Detaillierte Beschreibung einer bevorzugten Ausführungsform

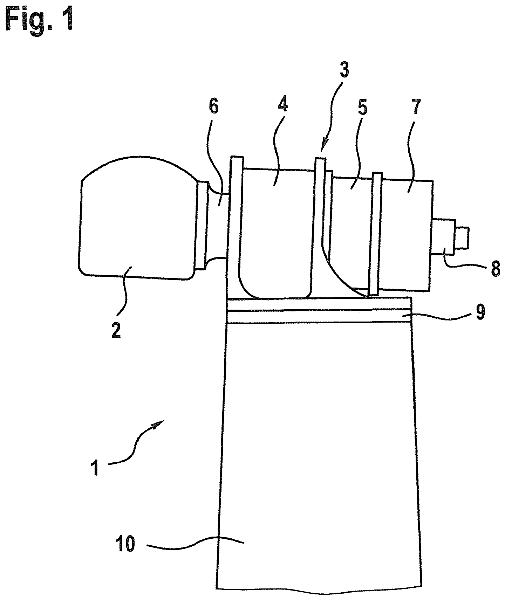

Fig. 1 zeigt eine Windkraftanlage 1 mit einer Nabe 2 eines nicht dargestellten Rotors. Die Windkraftanlage 1 umfasst ein mehrstufiges Generatorgetriebe in Form eines Umlaufrädergetriebes bzw. eines Planetengetriebes 3 mit einer ersten Getriebestufe 4 und einer zweiten Getriebestufe 5. Die erste Getriebestufe 4 des Planetengetriebes 3 wird über einen drehfest mit der Nabe 2 verbundenen rotierenden Ansatz 6 eines nicht weiter dargestellten Planetenträgers von der Nabe 2 angetrieben. Ein Generator 7 mit einer Schleifringeinheit 8 wird auf der der Nabe 2 entgegengesetzten Seite des Planetengetriebes 3 von dem Planetengetriebe 3 angetrieben, welches zusammen mit dem Generator 7 über ein Azimutlager 9 auf einem Turm 10 der Windkraftanlage 1 gelagert ist.

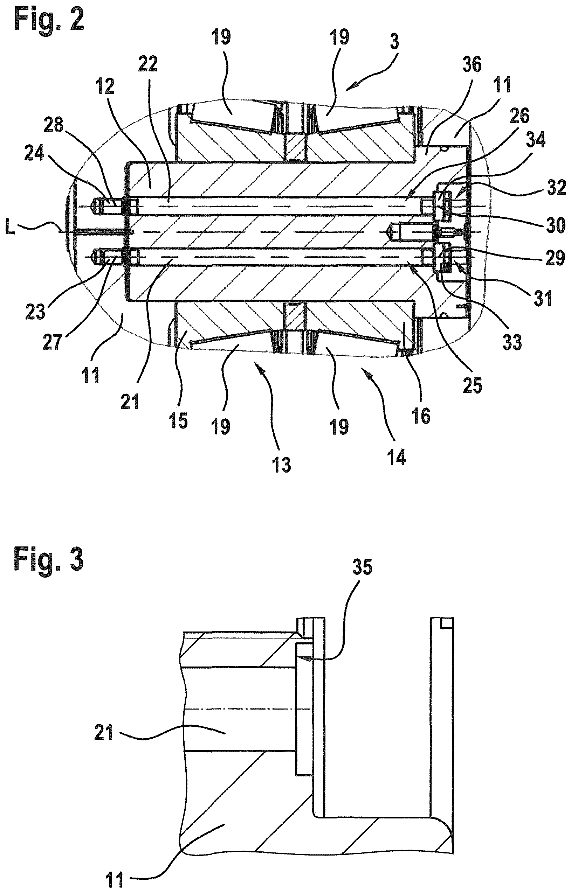

Fig. 2 bis 4 zeigen jeweils einen Teil eines Planetenträgers 11 einer Getriebestufe eines Planetengetriebes, z.B. des Planetengetriebes 3 nach Fig. 1. Der Planetenträger 11 umfasst einen Planetenbolzen 12, auf welchem zwei Kegelrollenlager 13, 14 angeordnet sind. Die Kegelrollenlager 13, 14 weisen eine O-Anordnung zueinander auf und umfassen jeweils einen Innenring 15, 16, einen Außenring 17, 18 sowie eine dazwischen angeordnete Mehrzahl von um den Umfang verteilten kegeligen Wälzkörper 19. Die Außenringe 17, 18 der Kegelrollenlager 13, 14 liegen an der Innenseite eines Planetenrades 20 an und sind mit diesem drehfest verbunden. Alternativ kann auch vorgesehen sein, dass die Kegelrollenlager 13, 14 keine Außenringe 17, 18 aufweisen und stattdessen die Wälzkörper 19 direkt in dem Planetenrad 20 gelagert sind. Die Innenringe 15, 16 der Kegelrollenlager 13, 14 liegen an der Außenseite des Planetenbolzens 12 an und sind mit diesem drehfest verbunden.

Eine erste Durchgangsbohrung 21 und eine zweite Durchgangsbohrung 22 gleichen Durchmessers durchsetzen den Planetenbolzen 12 axial, das heißt parallel zu dessen Längsachse L, und verbinden einander gegenüberliegende Stirnseiten des Planetenbolzens 12 miteinander. Eine von zwei Gewindebohrungen 23, 24 gleichen Durchmessers innerhalb des Planetenträgers 11 schließt sich jeweils unmittelbar an eine der Durchgangsbohrungen 21 bzw. 22 an, wobei der Durchmesser der Gewindebohrungen 23, 24 etwas kleiner ist als derjenige der Durchgangsbohrungen 21, 22. Jeweils eine von zwei Stiftschrauben 25, 26 gleichen Durchmessers ist durch die Durchgangsbohrungen 21, 22 gesteckt, wobei der Durchmesser der Stiftschrauben 25, 26 im Bereich der Durchgangsbohrungen 21, 22 kleiner ist als der Durchmesser der Durchgangsbohrungen 21, 22. Alternativ kann auch vorgesehen sein, dass eine einzige Durchgangsbohrung, eine einzige Stiftschraube und eine einzige Gewindebohrung mit den vorstehend genannten Eigenschaften angeordnet sind. Die Stiftschrauben 25, 26 weisen jeweils ein Einschraubende 27, 28 mit einem Außengewinde auf, mittels welchem sie in die dazu passenden Gewindebohrungen 23, 24 geschraubt sind. Den Einschraubenden gegenüberliegend weisen die Stiftschrauben 25, 26 jeweils ein Mutterende 29, 30 mit Außengewinde auf. Jeweils eine Mutter 31, 32 ist mittels eines zu den Außengewinden der Mutterenden 29, 30 passenden Innengewinde auf eine der Stiftschrauben 25, 26 im Bereich deren Mutterenden 29, 30 geschraubt.

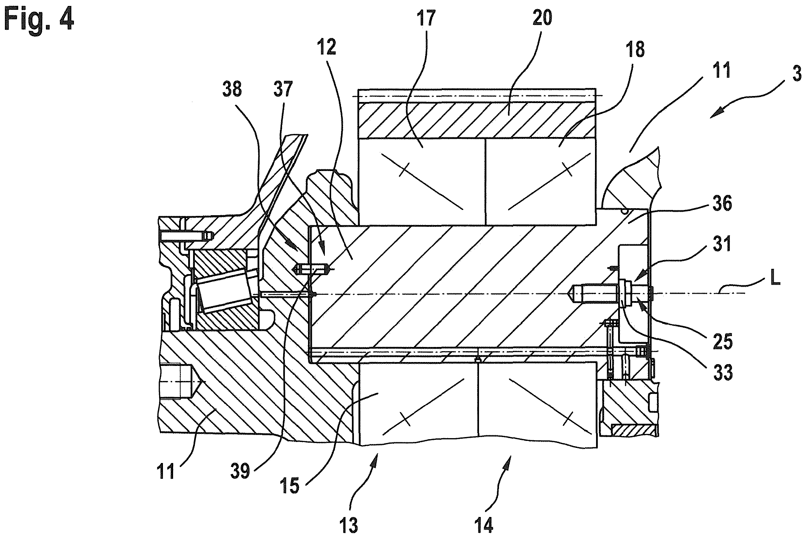

Die Muttern 31, 32 weisen jeweils eine integrierte Unterlegscheibe 33, 34 auf, welche auch ein Zentrierelement in Form eines Zentrierbundes der jeweiligen Mutter 31, 32 bildet. Die Unterlegscheiben 33, 34 bzw. die Zentrierbünde liegen jeweils in einer passenden Senkung 35 des Planetenbolzens 12 an, wodurch sie ausgerichtet sind. Durch diese Ausrichtung erfolgt zugleich eine Zentrierung der Stiftschrauben 25, 26 innerhalb der Durchgangsbohrungen 21, 22, wodurch ein Kontakt zwischen den Stiftschrauben 25, 26 und den Durchgangsbohrungen 21, 22 sicher vermieden werden kann. Durch ein hydraulisches Anziehverfahren werden die Muttern 31, 32 angezogen. Dadurch drückt ein radialer Absatz 35 des Planetenbolzens 12 in axialer Richtung auf einen inneren Teil der Stirnseite des durch Fig. 2 und 4 rechts dargestellten Innenrings 16 des entsprechenden Kegelrollenlagers 14 und spannt somit die Kegel rollen tager 13, 14 vor.

Wie aus Fig. 4 ersichtlich, geht von der in Fig. 4 links dargestellten Stirnseite des Planetenbolzens 12 eine axial verlaufende erste Positionierungsbohrung 37 aus. Der Planetenträger 11 weist eine zweite Positionierungsbohrung 38 auf, welche unmittelbar an die erste Positionierungsbohrung 37 anschließt, auf deren Höhe verläuft und den gleichen Durchmesser wie die erste Positionierungsbohrung 37 aufweist. Ein Lagesicherungselement in Form eines zylindrischen Spannstiftes 39 wurde zunächst teilweise in die zweite Positionierungsbohrung 38 gesteckt. Anschließend wurde der Planetenbolzen 12 mit seiner ersten Positionierungsbohrung 37 auf den von dem Planetenträger 11 abstehenden Teil des Spannstiftes 39 gesteckt und somit eine rotatorische Ausrichtung des Planetenbolzens 11 gegenüber dem Planetenträger 13 vorgenommen. Alternativ kann auch vorgesehen sein, dass die Positionierungsbohrungen 37, 38 leicht unterschiedliche Durchmesser aufweisen, um eine besonders einfache Montage zu gewährleisten.

### Bezuaszeichenliste

- 1: Windkraftanlage
- 2: Nabe
- 3: Planetengetriebe
- 4: erste Getriebestufe
- 5: zweite Getriebestufe
- 6: Ansatz
- 7: Generator
- 8: Schleifringeinheit
- 9: Azimutlager
- 10: Turm
- 11: Planetenträger
- 12: Planetenbolzen
- 13,14: Kegelrollenlager
- 15,16: Innenring
- 17, 18: Außenring
- 19: Wälzkörper
- 20: Planetenrad
- 21,22: Durchgangsbohrung
- 23, 24: Gewindebohrung
- 25, 26: Stiftschraube
- 27, 28: Einschraubende
- 29, 30: Mutterende
- 31, 32: Mutter
- 33, 34: Unterlegscheibe / Zentrierbund
- 35: Senkung
- 36: radialer Absatz
- 37: erste Positionierungsbohrung
- 38: zweite Positionierungsbohrung
- 39: Spannstift

## Patentansprüche

1. Planetenträger (11) für eine Getriebestufe (4, 5) eines Planetengetriebes (3), der Planetenträger (11) umfassend wenigstens einen drehfest in dem Planetenträger (11) gelagerten Planetenbolzen (12) und ein Paar von auf dem Planetenbolzen (12) gelagerten Kegelrollenlagern (13, 14), auf denen ein Planetenrad (20) gelagert ist, wobei der Planetenbolzen (12) mittels einer Stiftschrauben Verbindung, welche eine Stiftschraube (25, 26) und eine Mutter (31, 32) umfasst, an dem Planetenträger (11) befestigt ist und die Kegelrollenlager (13, 14) mittels der Stiftschrauben Verbindung zwischen dem Planetenträger (11) und dem Planetenbolzen (12) gegeneinander verspannt und axial vorgespannt sind; und, dass die Mutter (31, 32) ein Zentrierelement (33, 34) aufweist, welches in einer Senkung (35) des Planetenbolzens (12) ausgerichtet ist.

2. Planetenträger (11) nach Anspruch 1, **dadurch gekennzeichnet, dass** eine Durchgangsbohrung (21, 22) den Planetenbolzen (12) in dessen Längsrichtung (L) durchsetzt, wobei die Stiftschraube (25, 26) innerhalb der Durchgangsbohrung (21, 22) mit Abstand zu dem Planetenbolzen (12) verläuft.
Planetenbolzen

3. Planetenträger (11) nach einem der vorhergehenden Ansprüche, **dadurch gekennzeichnet, dass** das Zentrierelement (33, 34) durch einen Zentrierbund (33, 34), einen Zentrierabsatz, eine Zentrierbuchse oder einen Zentrieransatz gebildet wird.

4. Planetenträger (11) nach einem der vorstehenden Ansprüche, **dadurch gekennzeichnet, dass** die Mutter (31, 32) eine integrierte Unterlegscheibe (33, 34) aufweist.

5. Planetenträger (11) nach einem der vorstehenden Ansprüche, **dadurch gekennzeichnet, dass** ein Lagesicherungselement (39) bezüglich der Längsachse (L) des Planetenbolzens (12) exzentrisch in dem Planetenbolzen (12) und dem Planetenträger (11) angeordnet ist.

6. Planetenträger (11) nach Anspruch 5, **dadurch gekennzeichnet, dass** das Lagesicherungselement (39) durch einen Zylinderstift (39), einen Kegelstift oder eine Spannhülse gebildet ist.

7. Planetengetriebe (3) mit einem Planetenträger (11) nach einem der vorstehenden Ansprüche.

8. Windkraftanlage (1) mit einem Planetengetriebe (3) nach Anspruch 7.

9. Verfahren zur Vorspannung eines Paars von Kegelrollenlagern (13, 14) in einem Planetenträger (11) nach einem der vorstehenden Ansprüche, **dadurch gekennzeichnet, dass** die Mutter (31, 32) durch ein hydraulisches Anziehverfahren angezogen wird

## Claims

1. Planet carrier (11) for a gear stage (4, 5) of a planetary gear mechanism (3), the planet carrier (11) comprising at least one planet bolt (12), which is mounted in the planet carrier (11) in a rotationally fixed manner, and a pair of tapered roller bearings (13, 14) which are mounted on the planet bolt (12) and on which a planet gear (20) is mounted, wherein the planet bolt (12) is fastened to the planet carrier (11) by means of a pin screw connection which comprises a pin screw (25, 26) and a nut (31, 32), and the tapered roller bearings (13, 14) are braced against one another and axially pretensioned by means of the pin screw connection between the planet carrier (11) and the planet bolt (12); and, that the nut (31, 32) has a centring element (33, 34) which is oriented in a countersink (35) of the planet bolt (12).

2. Planet carrier (11) according to Claim 1, **characterized in that** a through-bore (21, 22) passes though the planet bolt (12) in its longitudinal direction (L), wherein the pin screw (25, 26) extends within the through-bore (21, 22) at a distance from the planet bolt (12).
Planet bolt

3. Planet carrier (11) according to either of the preceding claims, **characterized in that** the centring element (33, 34) is formed by a centring collar (33, 34), a centring shoulder, a centring bush or a centring extension.

4. Planet carrier (11) according to one of the preceding claims, **characterized in that** the nut (31, 32) has an integrated washer (33, 34).

5. Planet carrier (11) according to one of the preceding claims, **characterized in that** a position-securing element (39) is arranged in the planet bolt (12) and the planet carrier (11) eccentrically with respect to the longitudinal axis (L) of the planet bolt (12).

6. Planet carrier (11) according to Claim 5, **characterized in that** the position-securing element (39) is formed by a cylindrical pin (39), a conical pin or a clamping sleeve.

7. Planetary gear mechanism (3) having a planet carrier (11) according to one of the preceding claims.

8. Wind turbine (1) having a planetary gear mechanism (3) according to Claim 7.

9. Method for pretensioning a pair of tapered roller bearings (13, 14) in a planet carrier (11) according to one of the preceding claims, **characterized in that** the nut (31, 32) is tightened by a hydraulic tightening method.

## Revendications

1. Porte-satellites (11) pour un étage de transmission (4, 5) d'un engrenage planétaire (3), le porte-satellites (11) comprenant au moins un axe de satellite (12) supporté de manière solidaire en rotation dans le porte-satellites (11) et une paire de paliers à rouleaux coniques (13, 14) supportés sur l'axe de satellite (12), sur lesquels est supporté un pignon planétaire (20), l'axe de satellite (12) étant fixé au porte-satellites (11) au moyen d'une connexion à goujon fileté qui comprend un goujon fileté (25, 26) et un écrou (31, 32) et les paliers à rouleaux coniques (13, 14) étant serrés l'un contre l'autre et étant précontraints axialement au moyen de la connexion à goujon fileté entre le porte-satellites (11) et l'axe de satellite (12) ; et, que
l'écrou (31, 32) présente un élément de centrage (33, 34) qui est orienté dans un renfoncement (35) de l'axe de satellite (12).

2. Porte-satellites (11) selon la revendication 1, **caractérisé en ce qu'**un alésage traversant (21, 22) traverse l'axe de satellite (12) dans sa direction longitudinale (L), le goujon fileté (25, 26) s'étendant à l'intérieur de l'alésage traversant (21, 22) à distance de l'axe de satellite (12).
Axe de satellite

3. Porte-satellites (11) selon l'une quelconque des revendications précédentes, **caractérisé en ce que** l'élément de centrage (33, 34) est formé par un épaulement de centrage (33, 34), un gradin de centrage, une douille de centrage ou un rebord de centrage.

4. Porte-satellites (11) selon l'une quelconque des revendications précédentes, **caractérisé en ce que** l'écrou (31, 32) présente une rondelle intégrée (33, 34).

5. Porte-satellites (11) selon l'une quelconque des revendications précédentes, **caractérisé en ce qu'**un élément de blocage de position (39) est disposé par rapport à l'axe longitudinal (L) de l'axe de satellite (12) de manière excentrée dans l'axe de satellite (12) et le porte-satellites (11).

6. Porte-satellites (11) selon la revendication 5, **caractérisé en ce que** l'élément de blocage de position (39) est formé par une broche cylindrique (39), une broche conique ou une douille de serrage.

7. Engrenage planétaire (3) comprenant un porte-satellites (11) selon l'une quelconque des revendications précédentes.

8. Éolienne (1) comprenant un engrenage planétaire (3) selon la revendication 7.

9. Procédé de précontrainte d'une paire de paliers à rouleaux coniques (13, 14) dans un porte-satellites (11) selon l'une quelconque des revendications précédentes, **caractérisé en ce que** l'écrou (31, 32) est serré par un procédé de vissage hydraulique.
